# EUROPEAN PATENT SPECIFICATION

(11) **EP 2 644 552 B1**
(45) Date of publication and mention of the grant of the patent: **16.09.2015**
(21) Application number: 13152100.7
(22) Date of filing: 21.01.2013
(51) Int. Cl.: B65H 63/06, G01N 21/89

(54) **Yarn defect detecting device and method and yarn winding machine**
Vorrichtung und Verfahren zur Detektion eines Garndefekts und Garnwickelmaschine
Dispositif de détection de défaut de fil et procédé et machine de bobinage de fil

(30) Priority: 28.03.2012 JP 2012074837
(43) Date of publication of application: 02.10.2013
(73) Proprietor: Murata Machinery, Ltd., Kyoto-shi, Kyoto 601-8326 (JP)
(72) Inventor: Kawabata, Satoshi, Kyoto, Kyoto 612-8686 (JP); Nakai, Masato, Kyoto, Kyoto 612-8686 (JP)
(74) Representative: Weickmann & Weickmann

(56) References cited:
- EP-A1- 1 508 798
- WO-A1-93/13407
- JP-A- 2000 327 226
- US-A- 3 582 661
- US-A1- 2001 022 656

## Description

### BACKGROUND OF THE INVENTION

### 1. Field of the Invention

The present invention relates to a yarn defect detecting device and method and a yarn winding machine.

### 2. Description of the Related Art

Conventionally, a spinning machine and a yarn winding machine include a yarn clearer adapted to detect a state of a yarn. The yarn clearer includes a detector adapted to detect the thickness of the yarn. This detector includes a light emitting section and a light receiving section, and outputs a voltage corresponding to a light receiving amount of when light output from the light emitting section is received by the light receiving section as a detection signal. EP 1 508 798 A1 discloses such a yarn defect detecting device according to the preamble of claim 1.

Japanese Unexamined Patent Publication No. 2000-327226 describes a structure in which one sensitivity adjusting device is provided for multiple yarn clearers. The sensitivity adjusting device calculates a yarn travel reference value from an average value of the detection values at the time of yarn travelling for every yarn clearer, and increases or decreases a drive signal of the detector according to a result of comparison of the detection value and the yarn travel reference value. With the adjustment of the drive signal, the detection sensitivity of each detector can be corrected even if temperature change and/or time-dependent change that differ for each detector occur.

Considered is a yarn clearer (yarn defect detecting device) of a type that detects a transmitted light (first light) and a reflected light (second light). In this case, a light receiving section adapted to detect the transmitted light and a light receiving section adapted to detect the reflected light are provided. A light projecting section serves as a light source for transmitted light and a light source for reflected light.

However, in the conventional technique described above, consideration is not taken that the light projecting section serves as both the light source for the transmitted light and the light source for the reflected light. Thus, gain of the detecting section is hard to adjust at a high accuracy when the light projecting section serves as both the light source for the transmitted light and the light source for the reflected light.

### BRIEF SUMMARY OF THE INVENTION

It is an object of the present invention to provide a yarn defect detecting device and a yarn winding machine in which a light projecting section serves as both a light source for first light and a light source for second light, in which gain of a detecting section can be adjusted accurately.

A yarn defect detecting device of the present invention includes a detecting section, a first amplifying section, a second amplifying section, and a control section. The detecting section includes a first light projecting section adapted to project light in a first direction to a yarn path where a yarn travels, a first light receiving section arranged facing the first light projecting section in the first direction with the yarn path therebetween, and a second light receiving section arranged at a position different from the first light receiving section. The first amplifying section is adapted to amplify a detection signal of a first light projected by the first light projecting section and received by the first light receiving section to generate a first signal, and to output the first signal. The second amplifying section is adapted to amplify a detection signal of a second light projected by the first light projecting section and received by the second light receiving section to generate a second signal, and to output the second signal. The control section is adapted to perform a first adjustment processing to adjust an amplification factor in the first amplifying section in accordance with the first signal and to determine the amplification factor in the first amplifying section, and then to perform a second adjustment processing to adjust the amplification factor in the second amplifying section in accordance with the second signal while controlling the first light projecting section to emit light according to a control value of when the amplification factor in the first amplifying section is determined.

In this yarn defect detecting device, the first light receiving section is a light receiving section adapted to detect the first light, and the second light receiving section is the light receiving section adapted to detect the second light. The first light projecting section serves as both the light source for the first light and the light source for the second light. According to the yarn defect detecting device, when the amplification factor in the first amplifying section and the amplification factor in the second amplifying section are adjusted by the control section, the amplification factor in the first amplifying section is adjusted in accordance with the first signal, and then the amplification factor in the second amplifying section is adjusted in accordance with the second signal. Thus, the amplification factor in the second amplifying section is adjusted after the amplification factor in the first amplifying section is adjusted. The light quantity of the first light projecting section is thus already adjusted, and the light quantity of the first light projecting section is constant. The gain of the second signal is thus prevented from changing unintentionally. Therefore, when the light projecting section serves as both the light source for the first light and the light source for the second light, the gain of the detecting section can be accurately adjusted.

The detecting section further includes a second light projecting section. The second light projecting section is arranged facing the second light receiving section in a second direction different from the first direction with the yarn path therebetween and adapted to project light in the second direction to the yarn path. The first amplifying section is adapted to amplify the detection signal of the first light projected by the first light projecting section and received by the first light receiving section, to amplify a detection signal of a third light projected by the second light projecting section and received by the second light receiving section, to generate a first signal by adding the amplified detection signal of the first light and the amplified detection signal of the third light, and to output the first signal. The second amplifying section is adapted to amplify the detection signal of the second light projected by the first light projecting section and received by the second light receiving section, to amplify a detection signal of a fourth light projected by the second light projecting section and received by the first light receiving section, to generate a second signal by adding the amplified detection signal of the second light and the amplified detection signal of the fourth light, and to output the second signal. The detecting section has a biaxial light source including the first light projecting section and the second light projecting section. The first light receiving section serves as a light receiving section of the first light and a light receiving section of the fourth light. The second light receiving section serves as a light receiving section of the second light and a light receiving section of the third light. When the light quantity of the first light projecting section or the second light projecting section changes, not only the first signal but the second signal is also influenced. According to the yarn defect detecting device, when the amplification factor in the first amplifying section and the amplification factor in the second amplifying section are adjusted by the control section, the amplification factor in the first amplifying section is adjusted in accordance with the first signal, and thereafter, the amplification factor in the second amplifying section is adjusted in accordance with the second signal. The gain of the second signal is thus prevented from changing unintentionally, and the gain of the detecting section can be accurately adjusted even if the detecting section has a biaxial light source.

The control section is adapted to perform a zero-point correction of an output value corresponding to the detection signal of the first light received by the first light receiving section by adjusting the control value for light-emission of the first light projecting section, and then to perform the first adjustment processing. According to this configuration, the light quantity of the first light projecting section becomes constant by the zero-point correction of the first light. An accuracy of both the gain adjustment of the first signal and the gain adjustment of the second signal is thus improved. The zero-point correction of the first light refers to the processing of adjusting the control value to be provided to the light projecting section such that the control value corresponding to the first signal when nothing is arranged on the yarn path becomes a preset control value.

The control section is adapted to perform a zero-point correction of at least one of an output value corresponding to the detection signal of the first light received by the first light receiving section and an output value corresponding to the detection signal of the third light received by the second light receiving section by adjusting the control value for light-emission of at least one of the first light projecting section and the second light projecting section, and then to perform the first adjustment processing. By performing the zero-point correction of the first light, the light quantity of the first light projecting section and the second light projecting section becomes constant. The accuracy of both the gain adjustment of the first signal and the gain adjustment of the second signal is thus improved.

The control section is adapted to perform a zero-point correction of an output value corresponding to the detection signal of the second light received by the second light receiving section by a bias adjustment, and then to perform the second adjustment processing. The output value corresponding to the second signal is offset by performing the zero-point correction of the second light by the bias adjustment. At this time point, the light quantity of the first light projecting section or the second light projecting section is already adjusted, and hence the light quantity of the first light projecting section or the second light projecting section is constant. The accuracy of the gain adjustment of the second signal is further improved. The zero-point correction of the second light refers to the processing of adjusting the amplification factor in the second amplifying section such that the output value corresponding to the second signal of when nothing is arranged on the yarn path becomes a preset output value.

A space including the yarn path in the detecting section is adapted to receive an insert of a first linear body of a first color having a first reflectivity and a second linear body of a second color having a second reflectivity different from the first reflectivity. The control section is adapted to perform the first adjustment processing such that an output value corresponding to the first signal of when the first linear body or the second linear body is arranged in the yarn path is a preset first reference output value, and to perform the second adjustment processing such that a difference between an output value corresponding to the second signal of when the first linear body is arranged in the yarn path and an output value corresponding to the second signal of when the second linear body is arranged in the yarn path is a preset second reference output value. According to such configuration, the amplification factor of the first amplifying section is adjusted using either one of the first linear body or the second linear body such that the output value corresponding to the first signal becomes the first reference output value. Thereafter, the amplification factor of the second amplifying section is adjusted using the first linear body and the second linear body such that the difference between the output values corresponding to the second signal becomes the second reference output value. The accuracy of the gain adjustment of the detecting section is further improved by using the first linear body and the second linear body.

A yarn winding machine of the present invention includes the yarn defect detecting device described above; and a winding device arranged downstream of the yarn defect detecting device in a travelling direction of the yarn and adapted to wind the yarn.

According to the present invention, the gain of the detecting section can be accurately adjusted in a structure in which the light projecting section serves as the light source for the first light and the light source for the second light.

### BRIEF DESCRIPTION OF THE DRAWINGS

FIG. 1 is a perspective view of a spinning unit, which is a yarn winding machine, according to one embodiment of the present invention;
FIG. 2 is a block diagram of a yarn defect detecting device and a control device of the spinning unit of FIG. 1;
FIG. 3 is a block diagram of a yarn defect detecting section of the yarn defect detecting device of FIG. 2;
FIG. 4 is a flowchart illustrating processing procedure of gain adjustment processing in the yarn defect detecting section of FIG. 3;
FIG. 5 is a flowchart illustrating processing procedure of gain adjustment processing of a transmitted light in FIG. 4;
FIG. 6 is a flowchart corresponding to FIG. 5 in which an operation of an operator and a lighting pattern of a display lamp are both illustrated;
FIG. 7A is a view illustrating a relationship of a gain setting value and an output voltage of a transmission signal, and FIG. 7B is a view illustrating change in the output voltage in the gain adjustment of the transmitted light;
FIG. 8 is a flowchart illustrating processing procedure of gain adjustment processing of a reflected light in FIG. 4;
FIG. 9 is a flowchart corresponding to FIG. 8 in which the operation of an operator and a lighting pattern of the display lamp are both illustrated; and
FIG. 10A is a view illustrating a relationship of a gain setting value and an output voltage of a reflection signal, and FIG. 10B is a view illustrating change in the output voltage in the gain adjustment of the reflected light.

### DETAILED DESCRIPTION OF PREFERRED EMBODIMENTS

Preferred embodiments of the present invention will be hereinafter described in detail with reference to the drawings. In the drawings, the same reference numerals are denoted for the same or corresponding portions, and redundant description will be omitted.

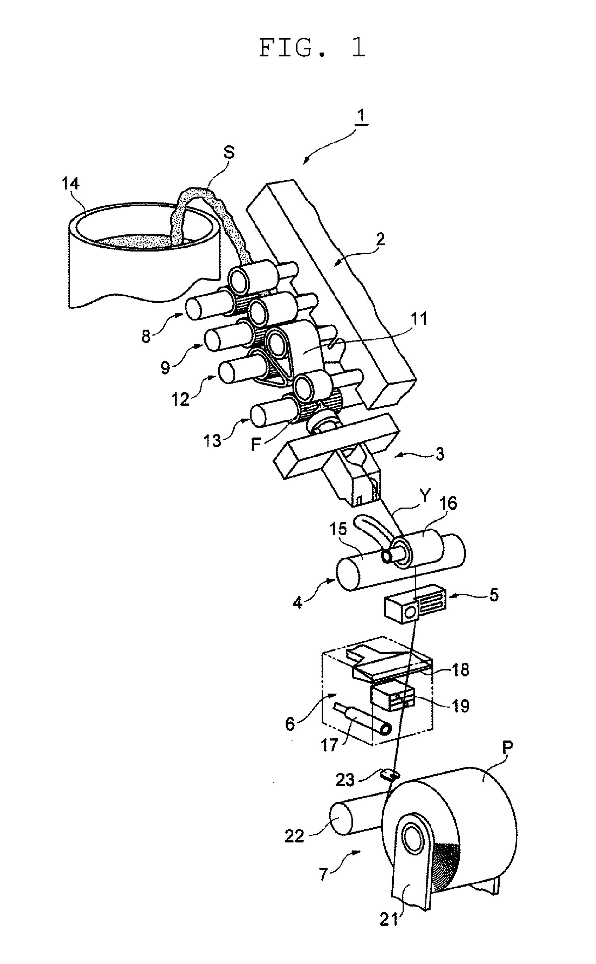

As illustrated in FIG. 1, a spinning unit (yarn winding machine) 1 is adapted to produce a yarn Y and wind the yarn Y into a package P. The spinning unit 1 includes a draft device (yarn supplying device) 2, a spinning device (yarn supplying device) 3, a yarn feeding device 4, a yarn defect detection device 5, a yarn joining device (yarn defect removing device) 6, and a winding device 7 in this order from the upstream along a travelling path of the yarn Y.

Such spinning unit 1 is lined in plurals to form a spinning machine. In this case, the yarn joining device 6 is movable among the plurality of spinning units 1, and performs a yarn joining operation in the spinning unit 1 in which the yarn Y is cut. That is, the yarn joining device 6 is shared among the plurality of spinning units 1. However, the yarn joining device 6 may be arranged in each spinning unit 1.

The draft device 2 includes a back roller pair 8, a third roller pair 9, a middle roller pair 12 provided with apron belts 11, and a front roller pair 13. The draft device 2 drafts a sliver S accommodated in a can 14 by the roller pairs 8, 9, 12, and 13 to produce a fiber bundle F.

The spinning device 3 is a pneumatic spinning device which uses a whirling airflow to twist the fiber bundle F drafted by the draft device 2 to produce the yarn Y. More specifically (although not illustrated), the spinning device 3 includes a spinning chamber, a fiber guiding section, a whirling airflow generating nozzle, and a hollow guide shaft body. The fiber guiding section is adapted to guide the fiber bundle F produced by the draft device 2 into the spinning chamber. The whirling airflow generating nozzle is adapted to generate the whirling airflow in the spinning chamber, and causes a fiber end of the fiber bundle F guided into the spinning chamber to be reversed and to whirl. The hollow guide shaft body is adapted to guide the spun yarn Y from the spinning chamber to outside the spinning device 3.

The yarn feeding device 4 includes a delivery roller 15 and a nip roller 16. The yarn feeding device 4 nips the yarn Y produced by the spinning device 3 with a pair of rollers 15 and 16 to feed the yarn Y to the winding device 7.

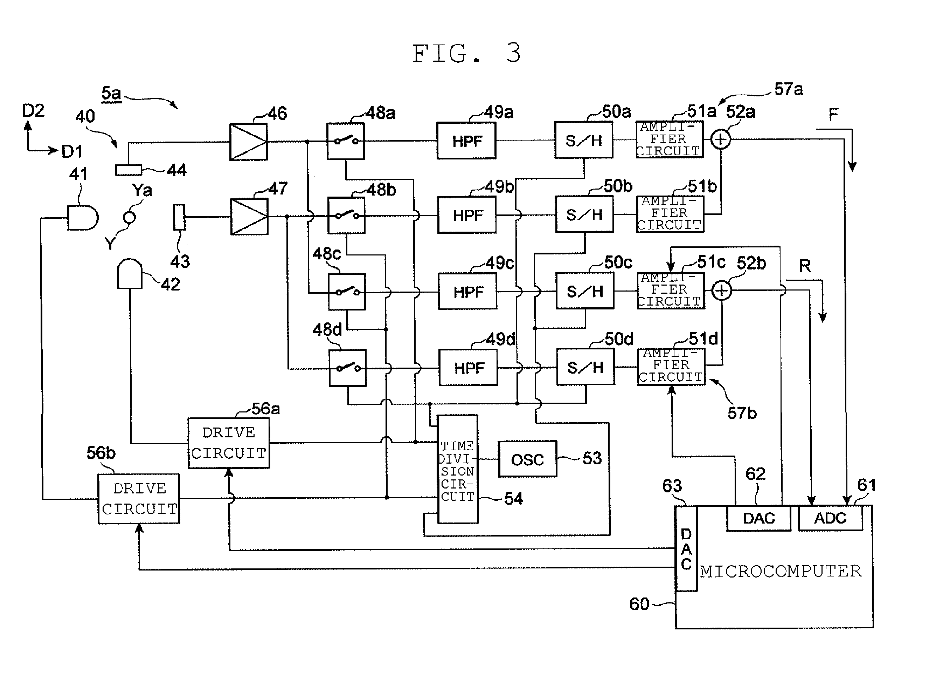

The yarn defect detecting device 5 is a device known as a yarn clearer, and detects presence or absence of a yarn defect in the yarn Y travelling through a yarn path Ya (see FIG. 3) by detecting a yarn thickness unevenness signal between the spinning device 3 and the winding device 7. The spinning unit 1 has a function of cutting the yarn Y when the detected yarn defect satisfies a predetermined condition.

The yarn joining device 6 includes a suction pipe 17, a suction mouth 18, and a splicer 19. The suction pipe 17 is swingably supported and catches the yarn end of the yarn Y from the spinning device 3 to guide the yarn end to the splicer 19. The suction mouth 18 is swingably supported and catches the yarn end of the yarn Y from the winding device 7 to guide the yarn end to the splicer 19. The splicer 19 joins the yarn ends guided by the suction pipe 17 and the suction mouth 18.

The winding device 7 winds the yarn Y into a package P, and includes a cradle arm 21, a winding drum 22, and a traverse device 23. The cradle arm 21 rotatably supports the package P, and causes a surface of the package P to make contact with a surface of the winding drum 22 at an appropriate pressure. The winding drum 22 rotates the package P made into contact by the cradle arm 21. The traverse device 23 traverses the yarn Y at a predetermined width with respect to the package P rotated by the winding drum 22. In FIG. 1, the spinning unit 1 is illustrated to wind the yarn Y into a cheese-shaped package P, but may also wind the yarn Y into a conical package. A shape of the package P wound by the spinning unit 1 is not particularly limited.

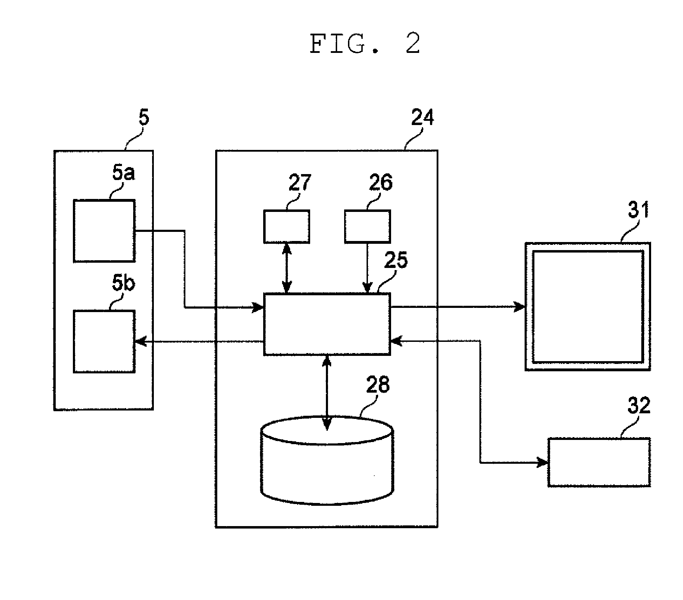

As illustrated in FIG. 2, the yarn defect detecting device 5 includes a yarn defect detecting section 5a and a cutting section 5b. The yarn defect detecting section 5a is an optical sensor having a biaxial light source, and is adapted to detect a thickness unevenness of the yarn Y by receiving the light projected toward the travelling yarn Y. The yarn defect detecting section 5a outputs a signal indicating a thickness of the travelling yarn Y to a control device 24. The cutting section 5b cuts the yarn Y when the control device 24 determines that the yarn defect should be removed based on a signal input from the yarn defect detecting section 5a.

The control device 24 is a device adapted to control the entire spinning unit 1, and includes a central processing device 25, a Read Only Memory (ROM) 26, a Random Access Memory (RAM) 27, and a hard disc 28. A display device 31 and an input device 32 are connected to the control device 24. The display device 31 displays various pieces of information to an operator. The input device 32 is an operation button, for example, for the operator to give various instructions to the spinning unit 1. The control device 24 may be arranged in each spinning unit 1, and one control device 24 may be arranged for each group of a plurality of spinning units 1. Alternatively, one control device 24 may be arranged for all the spinning units 1 of the spinning machine.

The yarn defect detecting section 5a of the yarn defect detecting device 5 will be hereinafter described in detail with reference to FIG. 3. The yarn defect detecting section 5a includes a first LED (first light projecting section) 41 adapted to project light in a first direction D1 to a yarn path Ya, and a second LED (second light projecting section) 42 adapted to project light in a second direction D2, which is substantially orthogonal to the first direction D1, to the yarn path Ya. The first direction and the second direction are not limited to being substantially orthogonal to each other, and may intersect with each other to form a predetermined angle other than a right angle. The yarn defect detecting section 5a includes a first PD (first light receiving section) 43 arranged facing the first LED 41 in the first direction D1, and a second PD (second light receiving section) 44 arranged facing the second LED 42 in the second direction D2. The travelling yarn Y is arranged between the first LED 41 and the first PD 43, and between the second LED 42 and the second PD 44. A detecting section 40 of the yarn defect detecting section 5a is configured including the first LED 41, the second LED 42, the first PD 43, and the second PD 44. The yarn defect detecting section 5a of the yarn defect detecting device 5 thus has a biaxial light source and a biaxial light receiving element. The LED stands for light emitting diode serving as a light source, and the PD stands for photodiode serving as a light receiving element.

In the detecting section 40, the first LED 41 and the second LED 42 irradiate (i.e., project) the yarn Y with light from different directions. The first PD 43 receives transmitted light (first light) irradiated from the first LED 41 and of which a portion is shielded by the yarn Y, and reflected light (fourth light) irradiated from the second LED 42 and reflected by the yarn Y. The second PD 44 receives transmitted light (third light) irradiated from the second LED 42 and of which a portion is shielded by the yarn Y, and reflected light (second light) irradiated from the first LED 41 and reflected by the yarn Y. Thus, in the yarn defect detecting section 5a, the first LED 41 and the second LED 42 respectively serve as the light source for the transmitted light and the light source for the reflected light. The first PD 43 and the second PD 44 respectively serve as the light receiving section of the transmitted light and the light receiving section of the reflected light. In other words, one light receiving section is used to receive the transmitted light and is also used to receive the reflected light.

Furthermore, the yarn defect detecting section 5a includes amplifiers 46 and 47, switching elements 48a to 48d, high-pass filter circuits 49a to 49d, sample-and-hold circuits 50a to 50d, amplifier circuits 51a to 51d, adders 52a and 52b, an oscillator 53, a time division circuit 54, drive circuits 56a and 56b, and a microcomputer (control section) 60.

The microcomputer 60 has a function of controlling the time division circuit 54. The microcomputer 60 controls the time division circuit 54 to divide an output pulse of the oscillator 53, and simultaneously drives the drive circuit 56a, the switching elements 48a and 48d, and the sample-and-hold circuits 50a and 50d. Furthermore, the microcomputer 60 controls the time division circuit 54 and simultaneously drives the drive circuit 56b, the switching elements 48b and 48c, and the sample-and-hold circuits 50b and 50c, alternately with the simultaneous driving of the drive circuit 56a, the switching elements 48a and 48d, and the sample-and-hold circuits 50a and 50d.

More specifically, the drive circuit 56a is first driven and the light is irradiated from the second LED 42 toward the yarn Y. The second PD 44 receives the transmitted light transmitted through the yarn Y, and outputs a signal corresponding to the light receiving amount as a detection signal of the transmitted light. The first PD 43 receives the reflected light reflected by the yarn Y, and outputs a signal corresponding to the light receiving amount as a detection signal of the reflected light. At this time, the switching elements 48a and 48d are closed (the switching elements 48b and 48c are opened). The detection signal of the transmitted light of the second PD 44 is passed through the high-pass filter circuit 49a and held by the sample-and-hold circuit 50a. The detection signal of the reflected light of the first PD 43 is passed through the high-pass filter circuit 49d and held by the sample-and-hold circuit 50d.

The drive circuit 56b is then driven and the light is irradiated from the first LED 41 toward the yarn Y. The first PD 43 receives the transmitted light transmitted through the yarn Y, and outputs a signal corresponding to the light receiving amount as a detection signal of the transmitted light. The second PD 44 receives the reflected light reflected by the yarn Y, and outputs a signal corresponding to the light receiving amount as a detection signal of the reflected light. At this time, the switching elements 48b and 48c are closed (the switching elements 48a and 48d are opened). The detection signal of the transmitted light of the first PD 43 is passed through the high-pass filter circuit 49b and held by the sample-and-hold circuit 50b. The detection signal of the reflected light of the second PD 44 is passed through the high-pass filter circuit 49c and held by the sample-and-hold circuit 50c.

The detection signal of the transmitted light held by the sample-and-hold circuit 50a is amplified by the amplifier circuit 51a. The detection signal of the transmitted light held by the sample-and-hold circuit 50b is amplified by the amplifier circuit 51b. The two amplified detection signals of the transmitted light are added by the adder 52a and output as a transmitting signal (first signal) F. The detection signal of the reflected light held by the sample-and-hold circuit 50c is amplified by the amplifier circuit 51c, and the detection signal of the reflected light held by the sample-and-hold circuit 50d is amplified by the amplifier circuit 51d. The two amplified detection signals of the reflected light are added by the adder 52b, and output as a reflecting signal (second signal) R. The transmitting signal F corresponds to a thickness signal of the yarn Y, and the reflecting signal R corresponds to a signal indicating presence/absence of foreign substance.

A transmitted light amplifying section (first amplifying section) 57a is configured by the amplifier circuit 51a, the amplifier circuit 51b, and the adder 52a. The transmitted light amplifying section 57a amplifies the detection signal of the transmitted light projected by the first LED 41 and received by the first PD 43 through the yarn Y, and also amplifies the detection signal of the transmitted light projected by the second LED 42 and received by the second PD 44 through the yarn Y. The transmitted light amplifying section 57a adds the amplified detection signals of the transmitted lights to generate a transmitting signal F, and outputs the transmitting signal F to the microcomputer 60. A reflected light amplifying section (second amplifying section) 57b is configured by the amplifier circuit 51c, the amplifier circuit 51d, and the adder 52b. In other words, the reflected light amplifying section 57b amplifies the detection signal of the reflected light projected by the first LED 41 and received by the second PD 44 through the yarn Y, and also amplifies the detection signal of the reflected light projected by the second LED 42 and received by the first PD 43 through the yarn Y. The reflected light amplifying section 57b adds the amplified detection signals of the reflected lights to generate a reflecting signal R, and outputs the reflecting signal R to the microcomputer 60.

The transmitting signal F output from the transmitted light amplifying section 57a and the reflecting signal R output from the reflected light amplifying section 57b are thus input to the microcomputer 60. The microcomputer 60 detects the yarn thickness unevenness signal of the yarn Y based on the transmitting signal F and the reflecting signal R obtained through the yarn Y. The microcomputer 60 includes an Analog-to-Digital Converter (ADC) 61 for converting (analog-digital converting) the transmitting signal F output from the transmitted light amplifying section 57a and the reflecting signal R output from the reflected light amplifying section 57b, from an analog value to a digital value.

In the yarn defect detecting section 5a, the first LED 41, the second LED 42, the switching elements 48a to 48d, and the sample-and-hold circuits 50a to 50d are driven in synchronization with the output pulse of the time division circuit 54 to prevent the influence of the light entering from outside and/or the other light source. Furthermore, since the thickness of the yarn Y and the foreign substance in the yarn Y can be monitored with one detecting section 40, more reliable thickness detection and foreign substance detection can be carried out. In particular, the yarn defect detecting section 5a has a feature in that the yarn defect detecting section 5a is less likely to not fail to detect a flat defect of the yarn Y compared to a clearer that includes only one light source and that is adapted to detect the thickness of the yarn from only one direction. Furthermore, the continuous monitoring of the thickness and the monitoring of the foreign substances can be achieved in the yarn defect detecting section 5a as a whole by alternately inputting input signals from two directions to the microcomputer 60 by the time division circuit 54.

The microcomputer 60 has a function of adjusting an amplification factor in the transmitted light amplifying section 57a based on the transmitting signal F, that is, the gain adjusting function of the transmitted light. The microcomputer 60 also has a function of adjusting an amplification factor in the reflected light amplifying section 57b based on the reflecting signal R, that is, the gain adjusting function of the reflected light. Furthermore, the microcomputer 60 has a function of applying a bias voltage to both amplifier circuits 51c and 51d of the reflected light amplifying section 57b, and adjusting the bias voltage. The microcomputer 60 also has a function of controlling the drive circuit 56a and the drive circuit 56b to adjust the drive voltage (control value for light emission) to be applied to the first LED 41 and the second LED 42. The microcomputer 60 includes a Digital-to-Analog Converter (DAC) 62 for generating the bias voltage to be applied to the amplifier circuits 51c and 51d by the conversion from the digital value to the analog value (digital-analog conversion). The microcomputer 60 includes a DAC 63 for generating a control voltage to be applied to the drive circuits 56a and 56b by the digital-analog conversion.

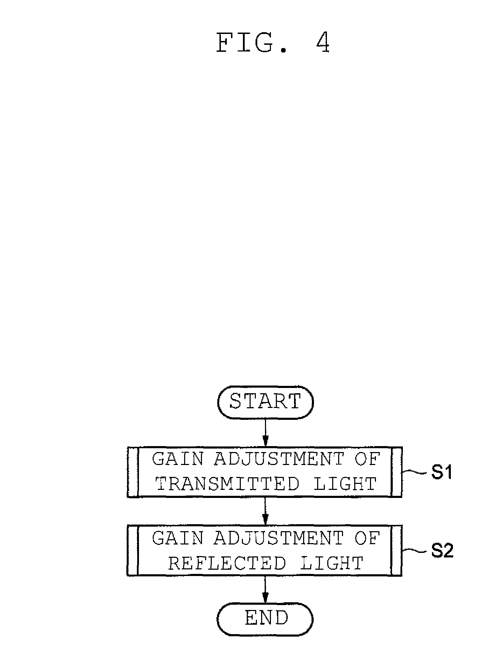

Gain adjustment processing (gain adjustment method of the detecting section 40) executed by the microcomputer 60 will be hereinafter described. As illustrated in FIG. 4, when adjusting the amplification factor in the transmitted light amplifying section 57a and the amplification factor in the reflected light amplifying section 57b, the microcomputer 60 first adjusts the amplification factor in the transmitted light amplifying section 57a. In other words, the gain of the transmitted light is adjusted (step S1). After adjusting the gain of the transmitted light, the amplification factor in the reflected light amplifying section 57b is adjusted. In other words, the gain of the reflected light is adjusted (step S2). The gain adjustment processing performed by the microcomputer 60 can be appropriately executed according to the operation of the operator. For example, the gain adjustment processing may be executed at the time of installation of the yarn defect detecting device 5 or may be executed before the start of winding of the package P. The gain adjustment processing may be executed before the yarn defect detecting device 5 or the spinning unit 1 is shipped from a factory.

1 In the following gain adjustment processing, a first gauge (first linear body) of a first color having a predetermined reflectivity (first reflectivity) and a second gauge (second linear body) of a second color having a reflectivity (second reflectivity) different from the reflectivity of the first gauge are prepared as standard gauges. The first gauge and the second gauge have a predetermined thickness, and can be inserted (arranged) at a position same as the travel position of the yarn Y. The color (first color) of the first gauge, for example, is a color close to the yarn Y. The color (second color) of the second gauge, for example, is a color close to the foreign substance that may be contained in the yarn Y.

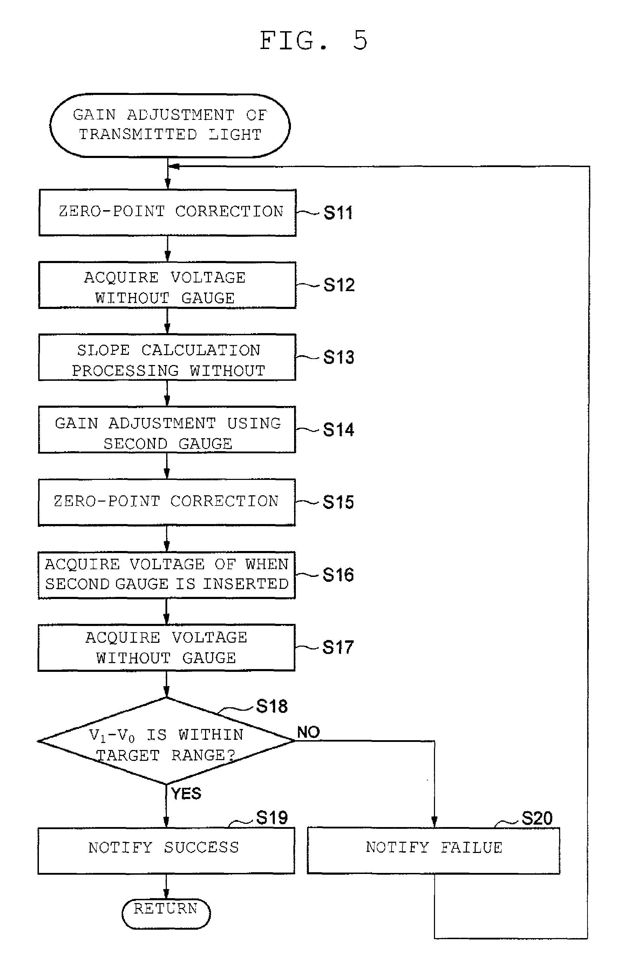

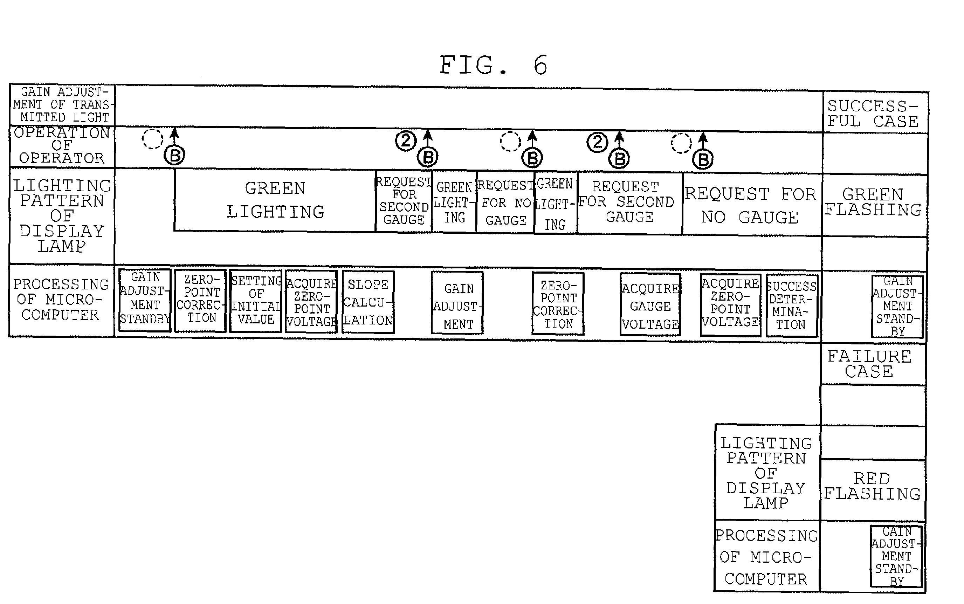

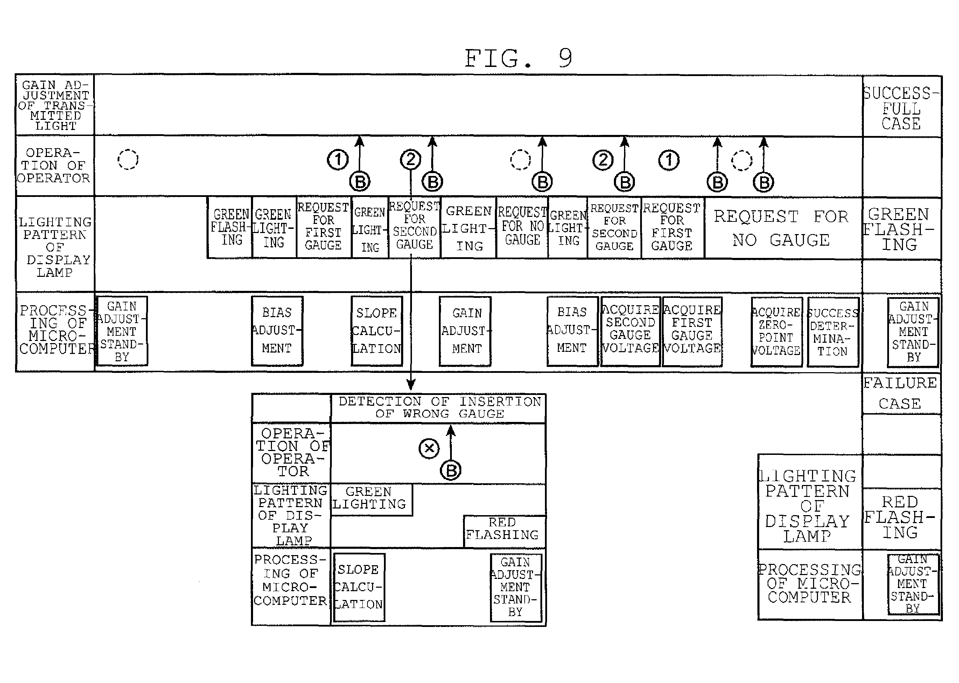

The gain adjustment processing of the transmitted light will be described with reference to FIG. 5 and FIG. 6. A display lamp that urges the operator to perform an operation is provided on the control device 24, for example, so as to be visible to the operator. The display lamp may be provided on the yarn defect detecting device 5, and is not particularly limited as long as it is provided at a position visible to the operator. In "operation of operator" in FIG. 6 (similarly in FIG. 9), "B" means that the operation button is pushed, "1" means that the first gauge is inserted to the yarn path Ya, "2" means that the second gauge is inserted to the yarn path Ya, and a broken line circle means that no gauge is inserted.

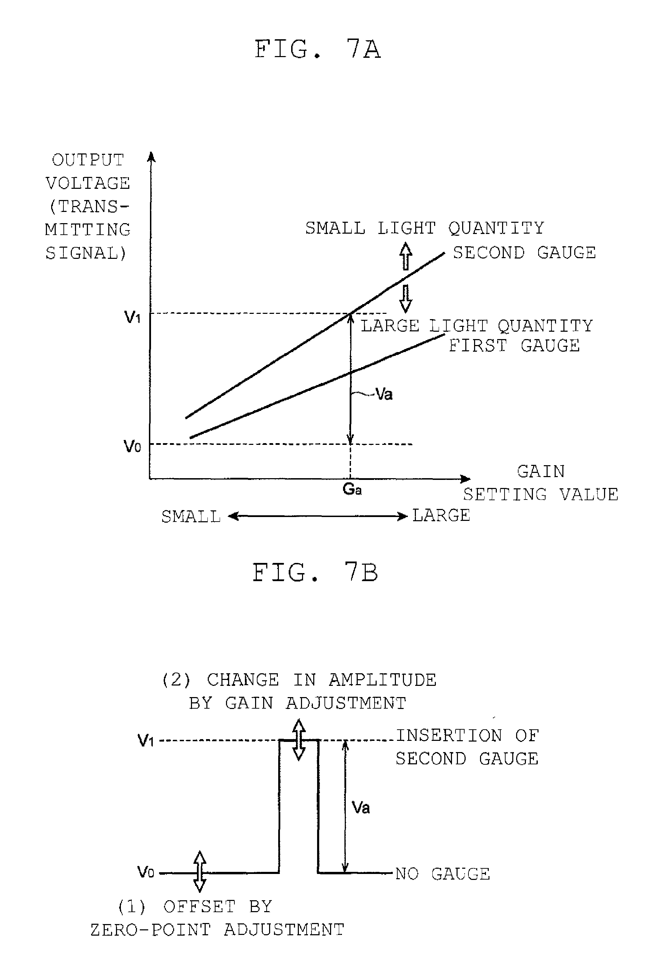

First, when the operator pushes the operation button, the microcomputer 60 in the gain adjustment standby state starts the gain adjustment processing. As illustrated in FIG. 5, the microcomputer 60 carries out a zero-point correction (step S11). This zero-point correction is processing of adjusting a drive voltage to be applied to the first LED 41 and the second LED 42 so that a voltage (output value) corresponding to the transmitting signal F of when nothing is arranged in the yarn path Ya becomes a prescribed voltage. Specifically, the microcomputer 60 adjusts the drive voltage such that the voltage corresponding to the transmitting signal F becomes a zero-point voltage V0 (see FIG. 7A and FIG. 7B). Upon carrying out the adjustment such that the voltage becomes V0, a condition may be provided such that the deviation between the actually measured voltage and the zero-point voltage V0 is within a predetermined difference (see step S18 to be described later). This also applies to other voltage adjustments to be hereinafter described.

The microcomputer 60 then sets an initial value and acquires a voltage without gauge (zero-point voltage) (step S12). The microcomputer 60 performs slope calculation processing without the gauge (step S13). The microcomputer 60 changes a gain setting value, that is, the amplification factor in the transmitted light amplifying section 57a with nothing arranged in the yarn path Ya and stores an output voltage of the transmitting signal F corresponding to each amplification factor. How the zero-point changes in accordance with the gain can be predicted by changing the amplification factor with nothing arranged in the yarn path Ya. The microcomputer 60 then lights a display lamp for the operator in a lighting pattern that means "request for second gauge".

When the operation button is then pushed by the operator, the microcomputer 60 carries out gain adjustment after insertion of the second gauge (step S14: first adjustment processing). The microcomputer 60 changes the amplification factor in the transmitted light amplifying section 57a such that the voltage according to the transmitting signal F of when the second gauge is arranged in the yarn path Ya becomes a preset reference voltage (first reference output value) Va (voltage V1 is an actual measurement value of the voltage), and the obtained amplification factor is assumed as an amplification factor Ga. As illustrated in FIG. 7A, the relationship Va = V1 - V0 is met. In the gain adjustment, the amplification factor Ga is desirably determined with reference to the output voltage of the transmitting signal F corresponding to each amplification factor stored in step S13 that has been obtained with no gauge arranged in the yarn path Ya. An accuracy of the gain adjustment of the transmitted light is thus improved.

In FIG. 7A, the voltage according to the transmitting signal F is inverted such that the voltage of when the yarn Y is thick becomes large. Thus, the output voltage of the transmitting signal F is lower as the light receiving amount of the transmitted light increases, and the output voltage of the transmitting signal F is higher as the light receiving amount of the transmitted light decreases. The microcomputer 60 then lights the display lamp for the operator in a lighting pattern that means "request for no gauge".

When the operation button is then pushed by the operator, the microcomputer 60 carries out the zero-point correction after detecting the removal of the second gauge (step S15). The processing here is similar to the processing in step S11 described above. The display lamp is then lighted for the operator in the lighting pattern that means "request for second gauge".

When the operation button is then pushed by the operator, after detecting the insertion of the second gauge, the microcomputer 60 acquires the voltage (gauge voltage) when the second gauge is inserted (step S16). The microcomputer 60 then lights the display lamp for the operator in the lighting pattern that means "request for no gauge".

When the operation button is then pushed by the operator, after detecting the removal of the second gauge, the microcomputer 60 acquires the voltage (zero-point voltage) when the gauge is not arranged (step S17). The microcomputer 60 then determines whether or not a difference (V1-V0) between V1 and V0 is within a target range (step S18: success determination processing). If the difference between V1 and V0 is within the target range (Step S18: YES), the microcomputer 60 notifies the operator of success (step S19), and terminates the gain adjustment processing of the transmitted light. If the difference between V1 and V0 is outside the target range (step S18: NO), the microcomputer 60 notifies the operator of failure (step S20), and returns to the processing of step S11.

The gain adjustment of the transmitted light, that is, the transmitting signal F is carried out according to the series of processing steps described above. The processing steps S15 to S17 are processing steps carried out to improve the accuracy of the gain adjustment. The processing steps S15 to S17 may be omitted.

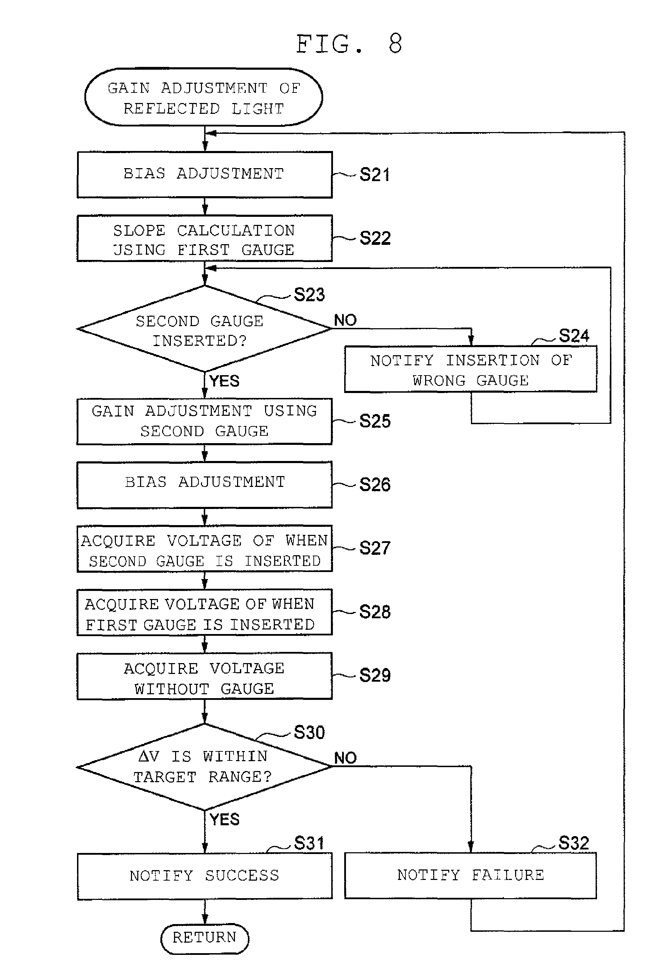

The gain adjustment processing of the reflected light will be described with reference to FIG. 8 and FIG. 9.

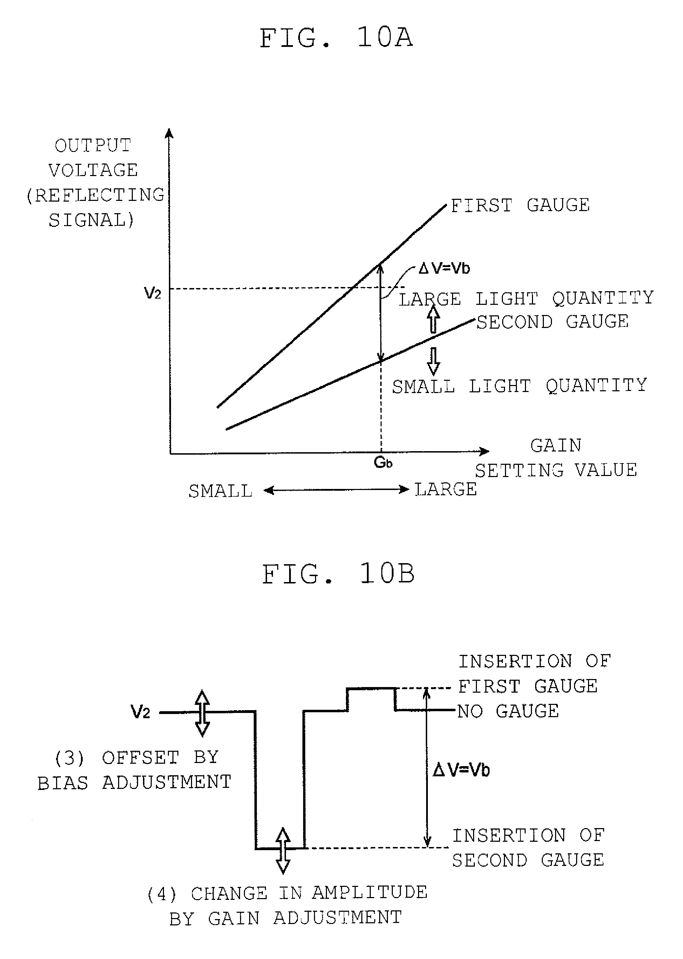

First, the microcomputer 60 carries out bias adjustment (step S21). This bias adjustment is a step of adjusting the voltage such that the voltage (output value) according to the reflecting signal R when nothing is arranged in the yarn path Ya becomes a preset voltage. Specifically, the microcomputer 60 adjusts a bias voltage such that the voltage according to the reflecting signal R becomes a zero-point voltage V2 (see FIG. 10A and FIG. 10B). The microcomputer 60 then lights the display lamp for the operator in a lighting pattern that means "request for first gauge".

When the operation button is then pushed by the operator, after insertion of the first gauge, the microcomputer 60 performs the slope calculation processing using the first gauge (step S22). The microcomputer 60 changes the gain setting value, that is, the amplification factor in the reflected light amplifying section 57b with the first gauge arranged in the yarn path Ya, and stores the output voltage of the reflecting signal R corresponding to each amplification factor. How the output signal (reflecting signal R) of when the first gauge is inserted changes according to the gain can be predicted by changing the amplification factor with the first gauge arranged in the yarn path Ya. The microcomputer 60 then lights a display lamp for the operator in the lighting pattern that means "request for second gauge".

When the operation button is then pushed by the operator, the microcomputer 60 determines whether or not the second gauge has been inserted based on the reflecting signal R (step S23). When a determination is made that the second gauge has not been inserted (step S23: NO), the microcomputer 60 makes a notification that a wrong gauge has been inserted (step S24), and returns to the processing of step S23. The processing of steps S23 and S24 corresponds to wrong-gauge insertion detecting processing. According to such processing, a determination can be made for not only an insertion of a wrong gauge, but also for no insertion of a gauge or failure of removal of the gauge. The wrong-gauge insertion detecting processing can be carried out at the insertion and/or removal timing of other gauges, and similar processing may be carried out at the gain adjustment of the transmitted light.

when a determination is made in step S23 that the second gauge has been inserted (step S23: YES), the microcomputer 60 carries out gain adjustment (step S25: second adjustment processing). The microcomputer 60 changes the amplification factor in the reflected light amplifying section 57b such that a potential difference ΔV between the voltage according to the reflecting signal F of when the first gauge is arranged in the yarn path Ya and the voltage according to the reflecting signal R of when the second gauge is arranged in the yarn path Ya becomes a preset reference potential difference (second reference output value) Vb and the obtained amplification factor is assumed as an amplification factor Gb (see FIG. 10A and FIG. 10B). In this gain adjustment, the amplification factor Gb is desirably determined with reference to the output voltage of the reflecting signal R corresponding to each amplification factor when the first gauge is inserted, the amplification factor being stored in step S22. The accuracy of the gain adjustment of the reflected light is thus improved. The microcomputer 60 then lights the display lamp for the operator in the lighting pattern that means "request for no gauge".

When the operation button is pushed by the operator, the microcomputer 60 carries out the bias adjustment after removal of the second gauge (step S26). This processing is similar to the processing in step S21 described above. The display lamp is then lighted in the lighting pattern that means "request for second gauge" with respect to the operator.

When the operation button is pushed by the operator, after insertion of the second gauge, the microcomputer 60 acquires the voltage (second gauge voltage) when the second gauge is being inserted(step S27). The microcomputer 50 then lights the display lamp for the operator in the lighting pattern that means "request for first gauge".

When the operation button is pushed by the operator, after insertion of the first gauge, the microcomputer 60 acquires the voltage (first gauge voltage) when the first gauge is being inserted(step S28). The microcomputer 60 then lights the display lamp for the operator in the lighting pattern that means "request for no gauge".

When the operation button is pushed by the operator, after removal of the first gauge, the microcomputer 60 acquires the voltage (zero-point voltage) when no gauge is arranged (step S29). The microcomputer 60 then determines whether or not the potential difference ΔV between the voltage according to the reflecting signal R when the first gauge is arranged in the yarn path Ya and the voltage according to the reflecting signal R when the second gauge is arranged in the yarn path Ya is within a target range (step S30: success determination processing). If the potential difference ΔV is within the target range (step S30: YES), the microcomputer 60 notifies the operator of success (step S31), and terminates the gain adjustment processing of the reflected light. If the potential difference ΔV is outside the target range (step S30: NO), the microcomputer 60 notifies the operator of failure (step S31), and returns to the processing of step S21.

The gain adjustment of the reflected light, that is, the reflecting signal R is carried out according to the series of processing described above. The steps S26 to S29 are carried out to improve the accuracy of the gain adjustment. The processing from step S26 to step S29 may be omitted.

According to the yarn defect detecting device 5, the spinning unit 1, and the gain adjustment method of the detecting section 40 of the yarn defect detecting device 5 of the present embodiment, when adjusting the amplification factor in the transmitted light amplifying section 57a and the amplification factor in the reflected light amplifying section 57b, the microcomputer 60 adjusts the amplification factor in the transmitted light amplifying section 57a based on the transmitting signal F and then adjusts the amplification factor in the reflected light amplifying section 57b based on the reflecting signal R. The amplification factor in the reflected light amplifying section 57b is adjusted after the amplification factor in the transmitted light amplifying section 57a is adjusted. The light quantity of the first LED 41 or the second LED 42 is already adjusted, and the light quantity of the first LED 41 or the second LED 42 is constant (see FIG. 7A and FIG. 7B). Thus, the gain of the reflecting signal R is prevented from changing unintentionally. Therefore, in a structure in which the detecting section 40 includes the biaxial light source, the gain of the detecting section 40 can be accurately adjusted.

One light receiving section is used to receive the transmitted light and also used to receive the reflected light as with the yarn defect detecting device 5. When the light quantity of the first LED 41 or the second LED 42 changes, not only the transmitting signal F but the reflecting signal R is also influenced. Furthermore, one of the factors causing the light quantity of the first LED 41 or the second LED 42 to change is the zero-point correction. However, since the light quantity of the first LED 41 or the second LED 42 also changes when performing the zero-point correction of the transmitted light, the light quantity of the reflected light also changes at the same time. The light quantity of the first LED 41 or the second LED 42 at completion of the zero-point correction also depends on the gain of the transmitted light amplifying section 57a. Smaller light quantity is required as the sensitivity of the transmitted light amplifying section 57a improves. In the yarn defect detecting device 5 having such characteristics, the gain of the reflecting signal R is prevented from changing unintentionally and the accuracy of the gain adjustment is improved according to the gain adjustment processing by the microcomputer 60 and the gain adjustment method.

The amplification factor in the transmitted light amplifying section 57a is adjusted so that the voltage according to the transmitting signal F becomes the reference voltage Va using the second gauge. Thereafter, the amplification factor in the reflected light amplifying section 57b is adjusted so that the potential difference ΔV between the voltages according to each reflecting signal R becomes the reference potential difference Vb using the first gauge and the second gauge. An accuracy of the gain adjustment of the detecting section 40 is thus further enhanced by using the first gauge and the second gauge. As illustrated in FIG. 10A, the first gauge and the second gauge each has a predetermined slope with respect to the change in the gain setting value. When the light quantity of the first LED 41 or the second LED 42 is changed, the output voltage thereof is offset. The offsetting amount differs between the first gauge and the second gauge (depending on the color of the gauge). According to the present embodiment, the light quantity is constant at the time of the gain adjustment of the reflecting signal R, and thus the accuracy of the gain adjustment is prevented from lowering.

The light quantity of the first LED 41 and the second LED 42 becomes constant by the zero-point correction of the transmitted light. An accuracy of both the gain adjustment of the transmitting signal F and the gain adjustment of the reflecting signal R is thus improved.

The voltage according to the reflecting signal R is offset by the zero-point correction (bias adjustment) of the reflected light (see FIG. 10B). At this point of time, the light quantity of the first LED 41 or the second LED 42 is already adjusted, and hence the light quantity of the first LED 41 or the second LED 42 is constant. The accuracy of the gain adjustment of the reflecting signal R is thus further improved.

Since the zero-point correction (bias adjustment) of the reflecting signal R is carried out after the completion of the gain adjustment of the transmitted light, an accuracy of the zero-point correction and the gain adjustment is further improved.

One embodiment of the present invention has been described, but the present invention is not limited to the embodiment described above. For example, the yarn winding machine of the present invention is not limited to the spinning unit of the spinning machine, and may be other yarn winding machines such as a winder unit of an automatic winder, and the like. The defect detecting device of the present invention may be a clearer of the automatic winder, or may be a clearer of other yarn winding machines.

In the spinning unit 1 described above, the yarn supplying device for supplying the yarn is configured by the draft device 2 and the spinning device 3, but the yarn supplying device of the present invention may be other yarn supplying devices such as a device configured to supply the yarn from a bobbin around which the yarn is wound.

The yarn winding machine of the present invention may include the display device as with the spinning unit 1 described above, or may be separately connected with a display device such as a personal computer.

When the yarn winding machine of the present invention is the spinning unit, the yarn is not limited to being pulled out from the spinning device by the delivery roller and the nip roller, and the yarn may be pulled out from the spinning device by a yarn accumulating roller adapted to accumulate the yarn at downstream of the spinning device. Furthermore, the cutting of the yarn when a yarn defect is detected may be performed with a cutter other than the cutting section of the yarn defect detecting device and/or stopping of a whirling airflow in the spinning device.

In the yarn defect detecting device of the present invention, the first gauge may be used in place of the second gauge in the gain adjustment of the transmitted light amplifying section. A gauge different from the first gauge and the second gauge having a predetermined thickness may be used. The gain adjustment of the transmitted light amplifying section can be carried out using gauges of different colors according to the type of the light projecting section (LED).

In the yarn defect detecting device of the present invention, the gain adjustment of the reflected light amplifying section may be carried out based on an output voltage of when nothing is inserted in the yarn path Ya and an output voltage of when the first or the second gauge is inserted.

The color of the display lamp described in FIG. 6 and FIG. 9 is merely an example. Other than notifying the operator by causing the lighting pattern of the display lamp to be the predetermined pattern, a message may be displayed on the display device.

The detecting section is not limited to including two light projecting sections. One of the light projecting sections may be omitted, and only one light projecting section may be arranged. In this case, the detecting section includes a light projecting section adapted to project light in a predetermined direction to the yarn path, a light receiving section for the transmitted light arranged facing the light projecting section in the predetermined direction, and a light receiving section for the reflected light arranged at a position different from the light receiving section for the transmitted light. One or a plurality of light receiving sections for the reflected light may be arranged. For example, when arranging two light receiving sections for the reflected light, the two light receiving sections for the reflected light may be arranged at different positions where the reflected light can be received. In this case, the two light receiving sections for the reflected light may be arranged symmetric to a line (or plane including the relevant line) connecting the light projecting section and the light receiving section for the transmitted light.

Apart from the reflected light amplifying section, a bias adjustment section may be independently arranged. The control value is not required to be the drive voltage, but an electric current supplied to the light projecting section may be assumed as the control value. The output value is not required to be the voltage, but an electric current may be assumed as the output value.

The type of light source (light projecting section) is not limited to the LED, and may be other small light sources. The small light source may be a small incandescent bulb (miniature bulb), halogen lamp, xenon tube, and the like. The light receiving section may be, for example, photodiode, phototransistor, cadmium sulfide (CdS) cell, and the like.

## Claims

1. A yarn defect detecting device comprising:
a detecting section (40) including a first light projecting section (41) adapted to project light in a first direction to a yarn path (Ya) where a yarn (Y) travels, a first light receiving section (43) arranged facing the first light projecting section (41) in the first direction with the yarn path (Ya) therebetween, a second light receiving section (44) arranged at a position different from the first light receiving section (43),
a first amplifying section (57a) adapted to amplify a detection signal of a first light projected by the first light projecting section (41) and received by the first light receiving section (43) to generate a first signal (F), and to output the first signal (F),
a second amplifying section (57b) adapted to amplify a detection signal of a second light projected by the first light projecting section (41) and received by the second light receiving section (44) to generate a second signal (R), and to output the second signal (R), **characterized by**
a control section (60) adapted to perform a first adjustment processing to adjust an amplification factor in the first amplifying section (57a) in accordance with the first signal (F) and to determine the amplification factor in the first amplifying section (57a), and then to perform a second adjustment processing to adjust the amplification factor in the second amplifying section (57b) in accordance with the second signal (R) while controlling the first light projecting section (41) to emit light according to a control value of when the amplification factor in the first amplifying section (57a) is determined.

2. The yarn defect detecting device according to claim 1, **characterized in that** the detecting section (40) further includes a second light projecting section (42) arranged facing the second light receiving section (44) in a second direction different from the first direction with the yarn path (Ya) therebetween and adapted to project light in the second direction to the yarn path (Ya),
wherein the first amplifying section (57a) is adapted to amplify the detection signal of the first light projected by the first light projecting section (41) and received by the first light receiving section (43), to amplify a detection signal of a third light projected by the second light projecting section (42) and received by the second light receiving section (44), to generate a first signal (F) by adding the amplified detection signal of the first light and the amplified detection signal of the third light, and to output the first signal (F), and
wherein the second amplifying section (57b) is adapted to amplify the detection signal of the second light projected by the first light projecting section (41) and received by the second light receiving section (44), to amplify a detection signal of a fourth light projected by the second light projecting section (42) and received by the first light receiving section (43), to generate a second signal (R) by adding the amplified detection signal of the second light and the amplified detection signal of the fourth light, and to output the second signal (R).

3. The yarn defect detecting device according to claim 1 or claim 2, **characterized in that** the control section (60) is adapted to perform a zero-point correction cf an output value corresponding to the detection signal of the first light received by the first light receiving section (43) by adjusting the control value for light-emission of the first light projecting section (41), and then to perform the first adjustment processing.

4. The yarn defect detecting device according to claim 2, **characterized in that** the control section (60) is adapted to perform a zero-point correction of at least one of an output value corresponding to the detection signal of the first light received by the first light receiving section (43) and an output value corresponding to the detection signal of the third light received by the second light receiving section (44) by adjusting the control value for light-emission of at least one of the first light projecting section (41) and the second light projecting section (42), and then to perform the first adjustment processing.

5. The yarn defect detecting device according to any one of claim 1 through claim 4, **characterized in that** the control section (60) is adapted to perform a zero-point correction of an output value corresponding to the detection signal of the second light received by the second light receiving section (44) by a bias adjustment, and then to perform the second adjustment processing.

6. The yarn defect detecting device according to any one of claim 2 through claim 4, **characterized in that** the control section (60) is adapted to perform a zero-point correction of an output value corresponding to the detection signal of the second light received by the second light receiving section (44) and/or an output value corresponding to the detection signal of the fourth light received by the first light receiving section (43) by a bias adjustment, and then to perform the second adjustment processing.

7. The yarn defect detecting device according to any one of claim 1 through claim 6, **characterized in that** a space including the yarn path (Ya) in the detecting section (40) is adapted to receive an insert of a first linear body of a first color having a first reflectivity and an insert of a second linear body of a second color having a second reflectivity different from the first reflectivity,
wherein the control section (60) is adapted to perform the first adjustment processing such that an output value corresponding to the first signal of when the first linear body or the second linear body is arranged in the yarn path (Ya) is a preset first reference output value, and
the control section (60) is adapted to perform the second adjustment processing such that a difference between an output value corresponding to the second signal when the first linear body is arranged in the yarn path (Ya) and an output value corresponding to the second signal when the second linear body is arranged in the yarn path (Ya) is a preset second reference output value.

8. A yarn winding machine **characterized by**
the yarn defect detecting device (5) according to any one of claim 1 through claim 7, and
a winding device (7) arranged downstream of the yarn defect detecting device (5) in a travelling direction of the yarn and adapted to wind the yarn (Y).

9. A method for detecting yarn defects comprising:
projecting light in a first direction to a yarn path (Ya) where a yarn (Y) travels with a detecting section (40) including a first light projecting section (41) and receiving this light with a first light receiving section (43) arranged facing the first light projecting section (41) in the first direction with the yarn path (Ya) therebetween and a second light receiving section (44) arranged at a position different from the first light receiving section (43),
amplifying a detection signal of a first light projected by the first light projecting section (41) and received by the first light receiving section (43) by a first amplifying section (57a) for generating and outputting a first signal (F),
amplifying a detection signal of a second light projected by the first light projecting section (41) and received by the second light receiving section (44) by a second amplifying section (57b) for generating and outputting a second signal (R), **characterized by**
a first adjustment processing adjusting an amplification factor in the first amplifying section (57a) in accordance with the first signal (F) and determining the amplification factor in the first amplifying section (57a), and a second adjustment processing adjusting the amplification factor in the second amplifying section (57b) in accordance with the second signal (R) while controlling the first light projecting section (41) to emit light according to a control value by a control section (60) when the amplification factor in the first amplifying section (57a) is determined.

10. The method according to claim 9, **characterized by** arranging a second light projecting section (42) in the detecting section (40) facing the second light receiving section (44) in a second direction different from the first direction with the yarn path (Ya) therebetween and projecting light in the second direction to the yarn path (Ya),
amplifying the detection signal of the first light projected by the first light projecting section (41) and received by the first light receiving section (43), and amplifying a detection signal of a third light projected by the second light projecting section (42) and received by the second light receiving section (44)by the first amplifying section (57a), and generating and outputting a first signal (F) by adding the amplified detection signal of the first light and the amplified detection signal of the third light, and
amplifying the detection signal of the second light projected by the first light projecting section (41) and received by the second light receiving section (44), and amplifying a detection signal of a fourth light projected by the second light projecting section (42) and received by the first light receiving section (43) by the second amplifying section (57b) and generating and outputting a second signal (R) by adding the amplified detection signal of the second light and the amplified detection signal of the fourth light.

11. The method according to claim 9 or claim 10, **characterized in that** the control section (60) is adapted to perform a zero-point correction of an output value corresponding to the detection signal of the first light received by the first light receiving section (41) by adjusting the control value for light-emission of the first light projecting section (41), and then performs the first adjustment processing.

12. The method according to claim 10, **characterized in that** the control section (60) performs a zero-point correction of at least one of an output value corresponding to the detection signal of the first light received by the first light receiving section (43) and an output value corresponding to the detection signal of the third light received by the second light receiving section (44) by adjusting the control value for light-emission of at least one of the first light projecting section (41) and the second light projecting section (42), and then performs the first adjustment processing.

13. The method according to any one of claim 9 through claim 12, **characterized in that** the control section (60) performs a zero-point correction of an output value corresponding to the detection signal of the second light received by the second light receiving section (44) by a bias adjustment, and then performs the second adjustment processing.

14. The method according to any one of claim 10 through claim 12, **characterized in that** the control section (60) performs a zero-point correction of an output value corresponding to the detection signal of the second light received by the second light receiving section (44) and/or an output value corresponding to the detection signal of the fourth signal received by the first light receiving section (43) by a bias adjustment, and then performs the second adjustment processing.

15. The method according to any one of claim 9 through claim 14, **characterized in that** in a space including the yarn path (Ya) in the detecting section (40) a first linear body of a first color having a first reflectivity is inserted and then a second linear body of a second color having a second reflectivity different from the first reflectivity is inserted,
wherein the control section (60) performs the first adjustment processing such that an output value corresponding to the first signal when the first linear body or the second linear body is arranged in the yarn path (Ya) is used as a preset first reference output value, and then
the control section (60) performs the second adjustment processing such that a difference between an output value corresponding to the second signal when the first linear body is arranged in the yarn path (Ya) and an output value corresponding to the second signal when the second linear body is arranged in the yarn path (Ya) is used as a preset second reference output value.

## Patentansprüche

1. Eine Vorrichtung zur Erkennung eines Garndefekts mit:
einem Erkennungsabschnitt (40) mit einem ersten Lichtprojektionsabschnitt (41), der dazu dient, Licht in einer ersten Richtung auf einen Garnweg (Ya) zu werfen, wo ein Garn (Y) läuft, einem ersten Lichtempfangsabschnitt (43) der gegenüber dem ersten Lichtprojektionsabschnitt (41) in der ersten Richtung mit dem Garnweg (Ya) dazwischen angeordnet ist, ein zweiter Lichtempfangsabschnitt (44) der an einer anderen Stelle als der erste Lichtempfangsabschnitt (43) angeordnet ist,
einem ersten Verstärkerabschnitt (57a) der dazu dient, ein Erkennungssignal eines ersten Lichtes, welches von dem ersten Lichtprojektionsabschnitt (41) abgestrahlt und von dem ersten Lichtempfangsabschnitt (43) empfangen worden ist, zu verstärken, um ein erstes Signal (F) zu erzeugen, und das erste Signal (F) auszugeben,
einem zweiten Verstärkerabschnitt (57b), der dazu dient, ein Erkennungssignal eines zweiten Lichtes zu verstärken, welches von dem ersten Lichtprojektionsabschnitt (41) abgestrahlt worden ist und von dem zweiten Lichtempfangsabschnitt (44) empfangen worden ist, um ein zweites Signal (R) zu erzeugen, und das zweite Signal (R) auszugeben, **gekennzeichnet durch**
einen Steuerabschnitt (60), der dazu dient, eine erste Einstellungsverarbeitung auszuführen, um einen Verstärkungsfaktor in dem ersten Verstärkungsabschnitt (57a) in Übereinstimmung mit dem ersten Signal (F) einzustellen und den Verstärkungsfaktor in dem ersten Verstärkungsabschnitt (57a) zu bestimmen, und sodann eine zweite Einstellungsverarbeitung durchzuführen, um den Verstärkungsfaktor in dem zweiten Verstärkungsabschnitt (57b) in Übereinstimmung mit dem zweiten Signal (R) einzustellen während der erste Lichtprojektionsabschnitt (41) gesteuert wird, damit er Licht entsprechend einem Steuerwert emittiert, wenn der Verstärkungsfaktor in dem ersten Verstärkungsabschnitt (57a) bestimmt wird.

2. Die Vorrichtung zur Erkennung eines Garndefekts nach Anspruch 1, **dadurch gekennzeichnet, dass**
der Erkennungsabschnitt (40) weiter einen zweiten Lichtprojektionsabschnitt (42) umfasst, der gegenüber dem zweiten Lichtempfangsabschnitt (44) in einer zweiten Richtung mit dem Garnweg (Ya) dazwischen angeordnet ist, die sich von der ersten Richtung unterscheidet und der dazu dient, Licht in der zweiten Richtung auf den Garnweg (Ya) zu projizieren,
wobei der erste Verstärkungsabschnitt (57a) dazu dient, das Erkennungssignal des ersten Lichts, welches von dem ersten Lichtprojektionsabschnitt (41) abgestrahlt worden ist und von dem ersten Lichtempfangsabschnitt (43) empfangen worden ist, und ein Erkennungssignal eines dritten Lichtes, welches von dem zweiten Lichtprojektionsabschnitt (42) abgestrahlt und von dem zweiten Lichtempfangsabschnitt (44) empfangen worden ist, zu verstärken, um ein erstes Signal (F) zu erzeugen, indem das verstärkte Erkennungssignal des ersten Lichtes und das verstärkte Erkennungssignal des dritten Lichtes addiert werden und das erste Signal (F) auszugeben und
wobei der zweite Verstärkungsabschnitt (57b) dazu dient, das Erkennungssignal des zweiten Lichtes, welches von dem ersten Lichtprojektionsabschnitt (41) abgestrahlt worden ist und von dem zweiten Lichtempfangsabschnitt (44) empfangen worden ist zu verstärken, ein Erkennungssignal eines vierten Lichtes zu verstärken welches von dem zweiten Lichtprojektionsabschnitt (42) abgestrahlt worden ist und von dem ersten Lichtempfangsabschnitt (43) empfangen worden ist, ein zweites Signal (R) durch Addition des verstärkten Erkennungssignals des zweiten Lichtes und des verstärkten Erkennungssignals des vierten Lichts zu erzeugen und das zweite Signal (R) auszugeben.

3. Die Vorrichtung zur Erkennung eines Garndefektes nach Anspruch 1 oder Anspruch 2, **dadurch gekennzeichnet, dass**
der Steuerabschnitt (60) dazu dient, eine Nullpunktskorrektur eines Ausgabewertes entsprechend dem Erkennungssignal des ersten Lichtes, welches von dem ersten Lichtempfangsabschnitt (43) empfangen worden ist durch Anpassung des Steuerwertes für die Lichtemission des ersten Lichtprojektionsabschnittes (41) durchzuführen, und dann die Verarbeitung der ersten Korrektur durchzuführen.

4. Vorrichtung zur Erkennung eines Garndefektes nach Anspruch 2, **dadurch gekennzeichnet, dass**
der Steuerabschnitt (60) dazu dient, eine Nullpunktskorrektur von zumindest einem von einem Ausgangswert entsprechend dem Erkennungssignal des ersten Lichtes, welches von dem ersten Lichtempfangsabschnitt (43) empfangen worden ist und von einem Ausgangswert entsprechend dem Erkennungssignal des dritten Lichtes, welches von dem zweiten Lichtempfangsabschnitt (44) empfangen worden ist durch Einstellung des Steuerwertes für die Lichtemission von zumindest einem von dem ersten Lichtprojektionsabschnitt (41) und dem zweiten Lichtprojektionsabschnitt (42) durchzuführen, und dann die erste Korrekturverarbeitung durchzuführen.

5. Vorrichtung zur Erkennung eines Garndefektes nach einem der Ansprüche 1 bis 4, **dadurch gekennzeichnet, dass**
der Steuerabschnitt (60) dazu dient, eine Nullpunktskorrektur eines Ausgangswertes entsprechend dem Erkennungssignal des zweiten Lichtes, welches von dem zweiten Lichtempfangsabschnitt (44) empfangen worden ist, durch eine Nullpunktabgleichungseinstellung durchzuführen, und dann die zweite Einstellungsverarbeitung durchzuführen.

6. Vorrichtung zur Erkennung eines Garndefektes nach einem der Ansprüche 2 bis 4, **dadurch gekennzeichnet, dass**
der Steuerabschnitt (60) dazu dient, eine Nullpunktskorrektur eines Ausgangswertes entsprechend dem Erkennungssignal des zweiten Lichtes, welches durch den zweiten Lichtempfangsabschnitt (44) und/oder eines Ausgangswerts entsprechend dem Erkennungssignal des vierten Lichts, welches von dem ersten Lichtempfangsabschnitt (43) empfangen worden ist, durch eine Nullpunktsabgleichungseinstellung durchzuführen und dann die zweite Einstellungsverarbeitung durchzuführen.

7. Vorrichtung zur Erkennung eines Garndefektes nach einem der Ansprüche 1 bis 6, **dadurch gekennzeichnet, dass**
ein Raum einschließlich des Garnweges (Ya) in dem Erkennungsabschnitt (40) dazu geeignet ist, dass dort ein erster länglicher Körper einer ersten Farbe mit einer ersten Reflexionsfähigkeit und ein zweiter länglicher Körper einer zweiten Farbe mit einer zweiten Reflexionsfähigkeit, die sich von der ersten Reflexionsfähigkeit unterscheidet, eingesetzt werden kann,
wobei der Steuerabschnitt (60) dazu dient, die erste Einstellungsverarbeitung durchzuführen, sodass ein Ausgangswert entsprechend dem ersten Signal wenn der erste längliche Körper oder der zweite längliche Körper in dem Garnweg (Ya) angeordnet ist, ein vorher festgelegter erster Referenzausgabewert ist, und
der Steuerabschnitt (60) dazu dient, die zweite Einstellungsverarbeitung durchzuführen, sodass eine Differenz zwischen einem Ausgabewert entsprechend dem zweiten Signal wenn der erste längliche Körper in dem Garnweg (Ya) angeordnet ist und ein Ausgabewert entsprechend dem zweiten Signal wenn der zweite längliche Körper in den Garnpfad (Ya) angeordnet ist, ein vorher festgelegter zweiter Referenzausgabewert ist.

8. Garnwickelmaschine, **gekennzeichnet durch**
die Vorrichtung zur Erkennung eines Garndefektes (5) entsprechend einem der Ansprüche 1 bis Anspruch 7, und
eine Wickelvorrichtung (7) die stromab der Vorrichtung zur Erkennung eines Garndefektes (5) in einer Laufrichtung des Garns angeordnet ist, und dazu dient, das Garn (Y) aufzuwickeln.

9. Ein Verfahren zur Erkennung von Garndefekten, bei dem mit
einem Erkennungsabschnitt (40) mit einem ersten Lichtprojektionsabschnitt (41), Licht in einer ersten Richtung auf einen Garnweg (Ya) geworfen wird, wo ein Garn (Y) läuft, und mit einem ersten Lichtempfangsabschnitt (43), der gegenüber dem ersten Lichtprojektionsabschnitt (41) in der ersten Richtung mit dem Garnweg (Ya) dazwischen angeordnet ist und mit einem zweiten Lichtempfangsabschnitt (44), der an einer anderen Stelle als der erste Lichtempfangsabschnitt (43) angeordnet ist, dieses Licht empfangen wird;
mit einem ersten Verstärkerabschnitt (57a) ein Erkennungssignal eines ersten Lichtes, welches von dem ersten Lichtprojektionsabschnitt (41) abgestrahlt und von dem ersten Lichtempfangsabschnitt (43) empfangen worden ist, verstärkt wird, um ein erstes Signal (F) zu erzeugen und auszugeben;
mit einem zweiten Verstärkerabschnitt (57b) ein Erkennungssignal eines zweiten Lichtes verstärkt wird, welches von dem ersten Lichtprojektionsabschnitt (41) abgestrahlt worden ist und von dem zweiten Lichtempfangsabschnitt (44) empfangen worden ist, um ein zweites Signal (R) zu erzeugen und auszugeben, **gekennzeichnet durch**
eine erste Einstellungsverarbeitung, um einen Verstärkungsfaktor in dem ersten Verstärkungsabschnitt (57a) in Übereinstimmung mit dem ersten Signal (F) einzustellen und den Verstärkungsfaktor in dem ersten Verstärkungsabschnitt (57a) zu bestimmen, und eine zweite Einstellungsverarbeitung, um den Verstärkungsfaktor in dem zweiten Verstärkungsabschnitt (57b) in Übereinstimmung mit dem zweiten Signal (R) einzustellen, während der erste Lichtprojektionsabschnitt (41) gesteuert wird, damit er Licht entsprechend einem Steuerwert emittiert, wenn der Verstärkungsfaktor in dem ersten Verstärkungsabschnitt (57a) bestimmt wird.

10. Das Verfahren nach Anspruch 9, **gekennzeichnet durch** Anordnen
eines zweiten Lichtprojektionsabschnitts (42) in dem Erkennungsabschnitt (40) gegenüber dem zweiten Lichtempfangsabschnitt (44) in einer zweiten Richtung mit dem Garnweg (Ya) dazwischen, die sich von der ersten Richtung unterscheidet und Projizieren von Licht in der zweiten Richtung auf den Garnweg (Ya);
Verstärken des Erkennungssignales des ersten Lichts, welches von dem ersten Lichtprojektionsabschnitt (41) abgestrahlt worden ist und von dem ersten Lichtempfangsabschnitt (43) empfangen worden ist, und eines Erkennungssignales eines dritten Lichtes, welches von dem zweiten Lichtprojektionsabschnitt (42) abgestrahlt und von dem zweiten Lichtempfangsabschnitt (44) empfangen worden ist, mittels des ersten Verstärkungsabschnittes (57a), um ein erstes Signal (F) zu erzeugen, indem das verstärkte Erkennungssignal des ersten Lichtes und das verstärkte Erkennungssignal des dritten Lichtes addiert werden und Ausgeben des ersten Signales (F) und
Verstärken des Erkennungssignales des zweiten Lichtes, welches von dem ersten Lichtprojektionsabschnitt (41) abgestrahlt worden ist und von dem zweiten Lichtempfangsabschnitt (44) empfangen worden und eines Erkennungssignales eines vierten Lichtes, welches von dem zweiten Lichtprojektionsabschnitt (42) abgestrahlt worden ist und von dem ersten Lichtempfangsabschnitt (43) empfangen worden ist, mittels des zweiten Verstärkungsabschnitts (57b) und Erzeugen und Ausgeben eines zweiten Signales (R) **durch** Addition des verstärkten Erkennungssignals des zweiten Lichtes und des verstärkten Erkennungssignals des vierten Lichts.

11. Das Verfahren nach Anspruch 9 oder Anspruch 10, **dadurch gekennzeichnet, dass**
der Steuerabschnitt (60) dazu dient, eine Nullpunktskorrektur eines Ausgabewertes entsprechend dem Erkennungssignal des ersten Lichtes, welches von dem ersten Lichtempfangsabschnitt (43) empfangen worden ist durch Anpassung des Steuerwertes für die Lichtemission des ersten Lichtprojektionsabschnittes (41) durchzuführen, und dann die Verarbeitung der ersten Korrektur durchzuführen.

12. Das Verfahren nach Anspruch 10, **dadurch gekennzeichnet, dass**
der Steuerabschnitt (60) eine Nullpunktskorrektur von zumindest einem von einem Ausgangswert entsprechend dem Erkennungssignal des ersten Lichtes, welches von dem ersten Lichtempfangsabschnitt (43) empfangen worden ist und von einem Ausgangswert entsprechend dem Erkennungssignal des dritten Lichtes, welches von dem zweiten Lichtempfangsabschnitt (44) empfangen worden ist durch Einstellung des Steuerwertes für die Lichtemission von zumindest einem von dem ersten Lichtprojektionsabschnitt (41) und dem zweiten Lichtprojektionsabschnitt (42) durchführt, und dann die erste Korrekturverarbeitung durchführt.

13. Das Verfahren nach einem der Ansprüche 9 bis 12, **dadurch gekennzeichnet, dass**
der Steuerabschnitt (60) eine Nullpunktskorrektur eines Ausgangswertes entsprechend dem Erkennungssignal des zweiten Lichtes, welches von dem zweiten Lichtempfangsabschnitt (44) empfangen worden ist, durch eine Nullpunktabgleichungseinstellung durchzuführen, und dann die zweite Einstellungsverarbeitung durchführt.

14. Das Verfahren nach einem der Ansprüche 2 bis 4, **dadurch gekennzeichnet, dass**
der Steuerabschnitt (60) eine Nullpunktskorrektur eines Ausgangswertes entsprechend dem Erkennungssignal des zweiten Lichtes, welches durch den zweiten Lichtempfangsabschnitt (44) und/oder eines Ausgangswerts entsprechend dem Erkennungssignal des vierten Lichts, welches von dem ersten Lichtempfangsabschnitt (43) empfangen worden ist, durch eine Nullpunktsabgleichungseinstellung durchführt und dann die zweite Einstellungsverarbeitung durchführt.

15. Das Verfahren nach einem der Ansprüche 9 bis 14, **dadurch gekennzeichnet, dass**
in einen Raum in dem Erkennungsabschnitt (40), der den Garnweg (Ya) einschließt, ein erster länglicher Körper einer ersten Farbe mit einer ersten Reflexionsfähigkeit und dann ein zweiter länglicher Körper einer zweiten Farbe mit einer zweiten Reflexionsfähigkeit, die sich von der ersten Reflexionsfähigkeit unterscheidet, eingesetzt wird,
wobei der Steuerabschnitt (60) die erste Einstellungsverarbeitung durchführt, sodass ein Ausgangswert entsprechend dem ersten Signal, wenn der erste längliche Körper oder der zweite längliche Körper in dem Garnweg (Ya) angeordnet ist, als vorher festgelegter erster Referenzausgabewert verwendet wird, und
der Steuerabschnitt (60) die zweite Einstellungsverarbeitung durchführt, sodass eine Differenz zwischen einem Ausgabewert entsprechend dem zweiten Signal wenn der erste längliche Körper in dem Garnweg (Ya) angeordnet ist und einem Ausgabewert entsprechend dem zweiten Signal wenn der zweite längliche Körper in dem Garnpfad (Ya) angeordnet ist, als vorher festgelegter zweiter Referenzausgabewert verwendet wird.

## Revendications

1. Dispositif de détection de défauts de fil comprenant :
une section de détection (40) comprenant une première section de projection de lumière (41) qui est à même de projeter de la lumière dans une première direction sur un trajet de fil (Ya), où un fil (Y) se déplace, une première section réceptrice de lumière (43) aménagée en regard de la première section de projection de lumière (41) dans la première direction avec le trajet de fil (Ya) entre elles, une seconde section réceptrice de lumière (44) aménagée dans une position différente de celle de la première section réceptrice de lumière (43),
une première section d'amplification (57a) qui est à même d'amplifier un signal de détection d'une première lumière projetée par la première section de projection de lumière (41) et reçue par la première section réceptrice de lumière (43) pour générer un premier signal (F) et pour délivrer le premier signal (F),
une seconde section d'amplification (57b) qui est à même d'amplifier un signal de détection d'une seconde lumière projetée par la première section de projection de lumière (41) et reçue par la seconde section réceptrice de lumière (44) pour générer un second signal (R) et délivrer le second signal (R), **caractérisé par** :
une section de commande (60) qui est à même d'effectuer un premier traitement d'ajustement pour ajuster un facteur d'amplification dans la première section d'amplification (57a) conformément au premier signal (F) et pour déterminer le facteur d'amplification dans la première section d'amplification (57a), et ensuite d'effectuer un second traitement d'ajustement pour ajuster le facteur d'amplification dans la seconde section d'amplification (57b) conformément au second signal (R) tout en commandant la première section de projection de lumière (41) afin d'émettre de la lumière selon une valeur de commande disponible lorsque le facteur d'amplification de la première section d'amplification (57a) est déterminé.

2. Dispositif de détection de défauts de fil selon la revendication 1, **caractérisé en ce que** la section de détection (40) comprend en outre une seconde section de projection de lumière (42) aménagée en regard de la seconde section réceptrice de lumière (44) dans une seconde direction différente de la première direction avec le trajet de fil (Ya) entre elles et qui est à même de projeter de la lumière dans la seconde direction sur le trajet de fil (Ya),
dans lequel la première section d'amplification (57a) est à même d'amplifier le signal de détection de la première lumière projetée par la première section de projection de lumière (41) et reçue par la première section réceptrice de lumière (43), d'amplifier un signal de détection d'une troisième lumière projetée par la seconde section de projection de lumière (42) et reçue par la seconde section réceptrice de lumière (44), de générer un premier signal (F) en ajoutant le signal de détection amplifié de la première lumière au signal de détection amplifié de la troisième lumière, et de délivrer le premier signal (F), et
dans lequel la seconde section d'amplification (57b) est à même d'amplifier le signal de détection de la seconde lumière projetée par la première section de projection de lumière (41) et reçue par la seconde section réceptrice de lumière (44), d'amplifier un signal de détection d'une quatrième lumière projetée par la seconde section de projection de lumière (42) et reçue par la première section réceptrice de lumière (43), de générer un second signal (R) en ajoutant le signal de détection amplifié de la seconde lumière et le signal de détection amplifié de la quatrième lumière, et de délivrer le second signal (R).

3. Dispositif de détection de défauts de fil selon la revendication 1 ou la revendication 2, **caractérisé en ce que** la section de commande (60) est à même d'effectuer une correction de point zéro d'une valeur de sortie correspondant au signal de détection de la première lumière reçue par la première section réceptrice de lumière (43) en ajustant la valeur de commande pour l'émission de lumière de la première section de projection de lumière (41), et d'effectuer ensuite le premier traitement d'ajustement.

4. Signal de détection de défauts de fil selon la revendication 2, **caractérisé en ce que** la section de commande (60) est à même d'effectuer une correction de point zéro d'au moins l'une d'une valeur de sortie correspondant au signal de détection de la première lumière reçue par la première section réceptrice de lumière (43) et d'une valeur de sortie correspondant au signal de détection de la troisième lumière reçue par la seconde section réceptrice de lumière (44) en ajustant la valeur de commande pour l'émission de lumière d'au moins l'une de la première section de projection de lumière (41) et de la seconde section de projection de lumière (42), puis d'effectuer le premier traitement d'ajustement.

5. Dispositif de détection de défauts de fil selon l'une quelconque des revendications 1 à 4, **caractérisé en ce que** la section de commande (60) est à même d'effectuer une correction de point zéro d'une valeur de sortie correspondant au signal de détection de la seconde lumière reçue par la seconde section réceptrice de lumière (44) par un ajustement de la polarisation, puis d'effectuer le second traitement d'ajustement.

6. Dispositif de détection de défauts de fil selon l'une quelconque des revendications 2 à 4, **caractérisé en ce que** la section de commande (60) est à même d'effectuer une correction de point zéro d'une valeur de sortie correspondant au signal de détection de la seconde lumière reçue par la seconde section réceptrice de lumière (44) et/ou d'une valeur de sortie correspondant au signal de détection du quatrième lumière reçu par la première section réceptrice de lumière (43) par un ajustement de la polarisation, puis d'effectuer le second traitement d'ajustement.

7. Dispositif de détection de défauts de fil selon l'une quelconque des revendications 1 à 6, **caractérisé en ce qu'**un espace comprenant le trajet de fil (Ya) dans la section de détection (40) qui est à même de recevoir un insert d'un premier corps linéaire d'une première couleur ayant une première réflectivité et un insert d'un second corps linéaire d'une seconde couleur ayant une seconde réflectivité différente de la première réflectivité,
dans lequel la section de commande (60) est à même d'effectuer le premier traitement d'ajustement de sorte qu'une valeur de sortie correspondant au premier signal disponible lorsque le premier corps linéaire ou bien le second corps linéaire est aménagé dans le trajet de fil (Ya) soit une première valeur de sortie de référence préétablie, et
la section de commande (60) est à même d'effectuer le second traitement d'ajustement de sorte qu'une différence entre une valeur de sortie correspondant au second signal lorsque le premier corps linéaire est aménagé dans le trajet de fil (Ya) et une valeur de sortie correspondant au second signal lorsque le second corps linéaire est aménagé dans le trajet de fil (Ya) soit une seconde valeur de sortie de référence préétablie.

8. Machine de bobinage de fil **caractérisée par** :
le dispositif de détection de défauts de fil (5) selon l'une quelconque des revendications 1 à 7 et
un dispositif de bobinage (7) aménagé en aval du dispositif de détection de défauts de fil (5) dans un sens de déglacement du fil et qui est à même de bobiner le fil (Y).

9. Procédé de détection de défauts de fil comprenant les étapes consistant à :
projeter de la lumière dans une première direction sur un trajet de fil (Ya) lorsqu'un fil (Y) se déplace avec une section de détection (40) comprenant une première section de projection de lumière (41) et recevant cette lumière par une première section réceptrice de lumière (43) aménagée en regard de la première section de projection de lumière (41) dans la première direction avec le trajet de fil (Ya) entre elles et une seconde section réceptrice de lumière (44) aménagée dans une position différente de la première section réceptrice de lumière (43),
amplifier un signal de détection d'une première lumière projetée par la première section de projection de lumière (41) et reçue par la première section réceptrice de lumière (43) par une première section d'amplification (57a) pour générer et délivrer un premier signal (F),
amplifier un signal de détection d'une seconde lumière projetée par la première section de projection de lumière (41) et reçue par la seconde section réceptrice de lumière (44) par une seconde section d'amplification (57b) pour générer et délivrer un second signal (R), **caractérisé par** :
un premier traitement d'ajustement qui ajuste un facteur d'amplification dans la première section d'amplification (57a) conformément au premier signal (F) et déterminant le facteur d'amplification dans la première section d'amplification (57a), et un second traitement d'ajustement ajustant le facteur d'amplification dans la seconde section d'amplification (57b) conformément au second signal (R) tout en commandant la première section de projection de lumière (41) pour qu'elle émette de la lumière selon une valeur de commande par une section de commande (60) lorsque le facteur d'amplification dans la première section d'amplification (57a) est déterminé.

10. Procédé selon la revendication 9, **caractérisé par** l'aménagement d'une seconde section de projection de lumière (42) dans la section de détection (40) en regard de la seconde section réceptrice de lumière (44) dans une seconde direction différente de la première direction avec le trajet de fil (Ya) entre elles et projetant de la lumière dans la seconde direction sur le trajet de fil (Ya),
l'amplification du signal de détection de la première lumière projetée par la première section de projection de lumière (41) et reçue par la première section réceptrice de lumière (43) et l'amplification d'un signal de détection d'une troisième lumière projetée par la seconde section de projection de lumière (42) et reçue par la seconde section réceptrice de lumière (44) par la première section d'amplification (57a), et la génération et la délivrance d'un premier signal (F) en ajoutant le signal de détection amplifié de la première lumière et le signal de détection amplifié de la troisième lumière, et
l'amplification du signal de détection de la seconde lumière projetée par la première section de projection de lumière (41) et reçue par la seconde section réceptrice de lumière (44), et l'amplification d'un signal de détection d'une quatrième lumière projetée par la seconde section de projection de lumière (42) et reçue par la première section réceptrice de lumière (43) par la seconde section d'amplification (57b), et la génération et la délivrance d'un second signal (R) en ajoutant le signal de détection amplifié de la seconde lumière et le signal de détection amplifié de la quatrième lumière.

11. Procédé selon la revendication 9 ou la revendication 10, **caractérisé en ce que** la section de commande (60) est à même d'effectuer une correction de point zéro d'une valeur de sortie correspondant au signal de détection de la première lumière reçue par la première section réceptrice de lumière (41) en ajustant la valeur de commande pour l'émission de lumière de la première section de projection de lumière (41), et d'effectuer ensuite le premier traitement d'ajustement.

12. Procédé selon la revendication 10, **caractérisé en ce que** la section de commande (60) effectue une correction de point zéro d'au moins l'une d'une valeur de sortie correspondant au signal de détection de la première lumière reçue par la première section réceptrice de lumière (43) et d'une valeur de sortie correspondant au signal de détection de la troisième lumière reçue par la seconde section réceptrice de lumière (44) en ajustant la valeur de commande pour l'émission de lumière d'au moins l'une de la première section de projection de lumière (41) et de la seconde section de projection de lumière (42), et effectue ensuite le premier traitement d'ajustement.

13. Procédé selon l'une quelconque des revendications 9 à 12, **caractérisé en ce que** la section de commande (60) effectue une correction de point zéro d'une valeur de sortie correspondant au signal de détection de la seconde lumière reçue par la seconde section réceptrice de lumière (44) par un ajustement de la polarisation, et effectue ensuite le second traitement d'ajustement.

14. Procédé selon l'une quelconque des revendications 10 à 12, **caractérisé en ce que** la section de commande (60) effectue une correction de point zéro d'une valeur de sortie correspondant au signal de détection de la seconde lumière reçue par la seconde section réceptrice de lumière (44) et/ou d'une valeur de sortie correspondant au signal de détection du quatrième signal reçu par la première section réceptrice de lumière (43) par un ajustement de la polarisation, et effectue ensuite le second traitement d'ajustement.

15. Procédé selon l'une quelconque des revendications 9 à 14, **caractérisé en ce que**, dans un espace comprenant le trajet de fil (Ya) dans la section de détection (40), un premier corps linéaire d'une première couleur ayant une première réflectivité est inséré et, ensuite, un second corps linéaire d'une seconde couleur ayant une seconde réflectivité différente de la première réflectivité est inséré,
dans lequel la section de commande (60) effectue le premier traitement d'ajustement de sorte qu'une valeur de sorti e correspondant au premier signal lorsque le premier corps linéaire ou le second corps linéaire est aménagé dans le trajet (Ya) soit utilisée comme première valeur de sortie de référence préétablie et, ensuite,
la section de commande (60) effectue le second traitement d'ajustement de sorte qu'une différence entre une valeur de sortie correspondant au second signal lorsque le premier corps linéaire est aménagé dans le trajet de fil (Ya) et une valeur de sortie correspondant au second signal lorsque le second corps linéaire est aménagé dans le trajet de fil (Ya) est utilisée comme seconde valeur de sortie de référence préétablie.
